# EUROPÄISCHE PATENTANMELDUNG

(11) **EP 1 215 872 A2**
(43) Veröffentlichungstag der Anmeldung: **19.06.2002**
(21) Anmeldenummer: 01129501.1
(22) Anmeldetag: 11.12.2001
(51) Int. Cl.: H04M 3/54

(54) **Verfahren zum Umleiten eines Rufs**

(30) Priorität: 13.12.2000 DE 10062024
(71) Anmelder: Tenovis GmbH & Co. KG, 60326 Frankfurt am Main (DE)
(72) Erfinder: Rodewald, Frank, 50181 Bedburg (DE)
(74) Vertreter: Bohnenberger, Johannes, Dr.

(57) **Zusammenfassung**

In einem Verfahren zum Umleiten eines eingehenden Rufs von Telekommunikationsendgerät (A1, A2, B1, C1) zu Telekommunikationsendgerät (A1, A2, B1, C1) innerhalb einer aus mindestens zwei Geräten bestehenden Reihe von Telekommunikationsendgeräten, wobei den Geräten jeweils ein Sprachspeicherbereich (SB_{A1}, SB_{A2}, SB_{B1}, SB_{C1}) zum Speichern von Sprachnachrichten zugeordnet ist, wird die mit dem Ruf eingehende Sprachnachricht in den Sprachspeicherbereich eines der Geräte (A1, A2, B1, C1), von dem aus zu einem anderen Gerät umgeleitet wird, durch Setzen eines Leistungsmerkmals gespeichert.

## Beschreibung

Die Erfindung betrifft ein Verfahren zum Umleiten eines eingehenden Rufs von Telekommunikationsendgerät zu Telekommunikationsendgerät innerhalb einer aus mindestens zwei Geräten bestehenden Reihe von Telekommunikationsendgeräten, wobei den Geräten jeweils ein Sprachspeicherbereich zum Speichern von Sprachnachrichten zugeordnet ist.

Rufumleitungen von Gerät zu Gerät und anschließend auf einen Sprachspeicher oder Sprachspeicherbereich des letzten Gerätes werden häufig angewendet. Derartige Rufumleitungen weisen die Gemeinsamkeit auf, daß die Rufnummer eines Kommunikationsteilnehmers und seines Telekommunikationsendgerätes an den Sprachspeicher übermittelt wird, sofern der Teilnehmer eine Rufumleitung auf den Sprachspeicher, wie beispielsweise einem Anrufbeantworter, geschaltet hat. Anhand dieser mitübertragenen Rufnummer des Teilnehmers ist eine Zuordnung des umgeleiteten Rufs auf einen bestimmten Speicherplatz innerhalb eines Sprachspeichers, der von mehreren Teilnehmern genutzt wird, möglich. Dadurch ist dem Teilnehmer ein direkter Zugriff auf die in dem Speicherplatz (Sprachbox) abgelegte Sprachnachricht, welche mit dem Ruf übermittelt wurde, möglich.

Da der Rufnummer eines Teilnehmers eine bestimmte Sprachbox zugeordnet ist, ist es zudem möglich, dem rufenden Teilnehmer, dessen Ruf auf die Sprachbox umgeleitet wird, einen bestimmten auf der Sprachbox abgespeicherten Ansagetext einzublenden.

Bei einer Rufumleitung von Telekommunikationsendgerät zu Telekommunikationsgerät und anschließend auf einen Sprachspeicher wird der umgeleitete Ruf auf der Sprachbox des letzten Gerätes abgespeichert. Dies gilt auch, wenn der Teilnehmer des ersten Gerätes den eingehenden Ruf entgegennimmt und anschließend an das zweite Gerät des zweiten Teilnehmers weiterleitet, wobei der zweite Teilnehmer wiederum eine Rufumleitung oder Rufweiterleitung, die einer zeitverzögerten Rufumleitung entspricht, zum Sprachspeicher eingerichtet hat. Beispielsweise kann ein bei einer Nebenstellenanlage eingehender externer Ruf zu einer Sekretärin oder zu einer Vermittlungseinrichtung weitergeleitet werden. Der Teilnehmer, dessen Ruf bei der Sekretärin eingeht, möchte diese Sekretärin in einer Angelegenheit sprechen. Wenn nun die Sekretärin eine (automatische) Rufumleitung an eine weitere Sekretärin mit einem weiteren Telekommunikationsendgerät eingerichtet hat, und diese weitere Sekretärin wiederum eine Rufumleitung auf einen Sprachspeicher eingerichtet hat, so läßt es sich nicht vermeiden, daß der umgeleitete Ruf auf den Sprachspeicher der weiteren Sekretärin und nicht auf den Sprachspeicher der ersten Sekretärin umgeleitet wird.

Nachteilhaft ergibt sich aus dem oben genannten Stand der Technik, daß der eingehende Ruf bei einer bestehenden Rufumleitung immer in der Sprachbox des letzten Gerätes in einer Reihe aus Telekommunikationsendgeräten abgelegt wird. Dadurch ergibt sich das Abspeichern von Sprachnachrichten in der Sprachbox eines Teilnehmers, den der rufende Teilnehmer gar nicht sprechen wollte.

Demzufolge liegt der vorliegenden Erfindung die Aufgabe zugrunde, ein Verfahren zum Umleiten eines für ein Telekommunikationsendgerät eingehenden Rufs von Telekommunikationsendgerät zu Telekommunikationsendgerät gegenüber dem Stand der Technik derart weiterzubilden, daß eine gezielte Rufumleitung auf Sprachspeicherbereiche möglich ist.

Diese Aufgabe wird durch ein Verfahren nach Patentanspruch 1 gelöst.

Die Erfindung schließt den wesentlichen Gedanken ein, daß der einem bestimmten Telekommunikationsendgerät zugeordnete Sprachspeicherbereich abhängig von einem gesetzten Leistungsmerkmal "eigene Sprachbox" aus der Reihe von Sprachspeicherbereichen frei ausgewählt werden kann. Hierfür ist jedem Gerät ein Sprachspeicherbereich zugeordnet. Somit wird die Sprachnachricht, die mit dem Ruf eingegangen ist, nicht notwendigerweise auf der Sprachbox des letzten Teilnehmers und seines Gerätes in einer Reihe von Telekommunikationsendgeräten gespeichert. Vielmehr erfolgt, abhängig von dem gesetzten Leistungsmerkmal, durch das einzelne Gerät die Speicherung der Sprachnachricht in der Sprachbox dieses Gerätes vorzunehmen.

Das Setzen des Leistungsmerkmales "eigene Sprachbox" kann mit Hilfe jedes Telekommunikationsendgerätes durchgeführt werden. Dadurch bleibt es dem einzelnen Teilnehmer selbst überlassen, ob er eine Abspeicherung von Sprachnachrichten auf seiner Sprachbox wünscht oder nicht.

Vorteilhafterweise sind alle den einzelnen Telekommunikationsendgeräten zugeordneten Sprachspeicherbereiche zu einem gemeinsamen Sprachspeicher zusammengefaßt, auf den jedes Gerät Zugriff hat. Ein solcher ist insbesondere auf einem entsprechendes Server des Telekommunikationsnetzes oder in einer Zentraleinheit einer Telekommunikationsanlage realisiert.

In einer bevorzugten Ausführungsform wird in einem in einem Verbindungsspeicher angeordneten Rufnummernspeicher die Rufnummer des Telekommunikationsendgerätes, welches das Leistungsmerkmal gesetzt hat, für jeden umgeleiteten Ruf gespeichert. Demgegenüber wird die Rufnummer eines Telekommunikationsendgerätes, welches das Leistungsmerkmal nicht gesetzt hat und bei dem der umgeleitete Ruf gerade angekommen ist, nicht gespeichert.

Jedoch wird beim Durchlaufen des Rufs, der von Gerät zu Gerät umgeleitet wird, der Speicher von einem Telekommunikationsendgerät initialisiert, sofern es als Telekommunikationsendgerät, welches kein Leistungsmerkmal gesetzt hat, vor einem Telekommunikationsendgerät, welches das Leistungsmerkmal gesetzt hat, in der Umleitungskette angeordnet ist. Somit wird der weitere Speicher von einem Telekommunikationsendgerät, das das Leistungsmerkmal "eigene Sprachbox" nicht gesetzt hat, lediglich initialisiert, während er von einem Telekommunikationsendgerät, das das Leistungsmerkmal "eigene Sprachbox" gesetzt hat, mit dessen Rufnummer in seinem Speicherplatz belegt wird. Sobald nun die gesamte Reihe von Telekommunikationsendgeräten von dem umgeleiteten Ruf durchlaufen worden ist, wird mit der gespeicherten Rufnummer des ersten Gerätes, das das Leistungsmerkmal gesetzt hat, dessen Sprachspeicherbereich adressiert und anschließend die Sprachnachricht in diesem Sprachspeicherbereich abgespeichert. Dadurch ist ein Abspeichern der Sprachnachricht nicht nur in dem Sprachspeicherbereich des letzten Telekommunikationsendgerätes in der Rufumleitungskette möglich.

In einer bevorzugten Ausführungsform kann das Leistungsmerkmal "eigene Sprachbox" von Teilnehmern an deren digitalen Telekommunikationsendgeräten derart gesetzt werden, daß die Rufumleitung auf einen anderen Sprachspeicherbereich als den dem eigenen Gerät zugeordneten Sprachspeicherbereich erfolgt. Dadurch kann der Teilnehmer beispielsweise während eines längeren Urlaubs das Umleiten des Rufs und der damit übertragenen Sprachnachrichten auf eine Sprachbox eines anderen Telekommunikationsendgerätes einrichten.

Weitere Ausführungen der Erfindung ergeben sich aus den Unteransprüchen.

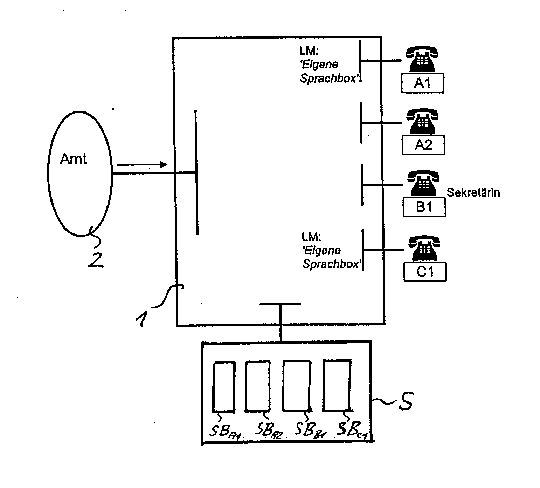

Nachfolgend wird die Erfindung anhand von einem Ausführungsbeispiel beschrieben, daß anhand der Abbildung näher erläutert wird. Hierbei zeigt die Figur ein Blockschaltbild einer Ausführungsform der Erfindung.

Die beispielsweise in einer Nebenstellenanlage eingehenden externen amtsseitigen Anrufe werden an eines der Telekommunikationsendgeräte A1, A2, B1, C1 umgeleitet. Die einzelnen Telekommunikationsendgeräte können sowohl eine Rufumleitung untereinander als auch zu einem Sprachspeicher S eingerichtet haben. Abhängig davon, ob der Teilnehmer eines dieser Telekommunikationsendgeräte eine direkte Rufumleitung auf die ihm zugeordnete Sprachbox (SB_{A1}, SB_{A2}, SB_{B1}, SB_{C1}) in dem Sprachspeicher S wünscht, setzt der Teilnehmer des Telekommunikationsendgerätes das Leistungsmerkmal "eigene Sprachbox". Dadurch kann für einzelne Telekommunikationsendgeräte der verschiedenen Teilnehmer festgelegt werden, daß der eingehende Ruf in der eigenen Sprachbox anstatt in der Sprachbox des Rufumleitungszieles, einem weiteren Telekommunikationsendgerät, abgespeichert wird.

Geht nun ein externer Ruf bei dem Telekommunikationsendgerät A1 ein, so wird die Rufnummer des umleitenden oder umlegenden Telekommunikationsendgerätes A1 in einem weiteren Speicher innerhalb eines Verbindungsspeichers der Nebenstellenanlage für diesen umgeleiteten Ruf gespeichert. Eine derartige Speicherung findet aufgrund des Setzens des Leistungsmerkmales "eigene Sprachbox" statt.

Zwischenzeitlich wird der Ruf von dem Telekommunikationsendgerät A1 beispielsweise an das Telekommunikationsendgerät B1 weitergeleitet. Anschließend wird von dem Telekommunikationsendgerät B1 überprüft, ob in dem weiteren Speicher bereits eine Rufnummer abgespeichert ist. Da die Rufnummer des Telekommunikationsendgerätes A1 bereits abgespeichert ist, wird keine Änderung des Speicherinhalts in dem weiteren Speicher durch das Telekommunikationsendgerät B1 durchgeführt. Sofern das Telekommunikationsendgerät B1 das letzte Telekommunikationsendgerät in der Rufumleitungskette ist, wird nun von dem Sprachspeicher S der Inhalt des weiteren Speichers überprüft und festgestellt, daß die Rufnummer des Telekommunikationsendgerätes A1 bereits darin abgespeichert ist. Da in dem weiteren Speicher bereits eine Rufnummer vorhanden ist, wird mit dieser der Speicherbereich SB_{A1} in dem Sprachspeicher, der dem Telekommunikationsendgerät A1 zugeordnet ist, adressiert und der Ruf mit der damit übertragenen Sprachnachricht in diesem Speicherbereich SB_{A1} (Sprachbox) abgespeichert.

Sofern das erste Telekommunikationsendgerät in der Umleitungskette kein Leistungsmerkmal "eigene Sprachbox" gesetzt hat, wird der weitere Speicher lediglich initialisiert, jedoch nicht mit einer Rufnummer des ersten Telekommunikationsendgerätes belegt. Sobald innerhalb der Rufumleitungskette der Ruf zu einem Endgerät gelangt, das das Leistungsmerkmal "eigene Sprachbox" gesetzt hat, wird dessen Rufnummer in dem weiteren Speicher abgespeichert. Anschließend wird die gesamte Rufumleitungskette von Endgerät zu Endgerät durchlaufen und ein Überprüfen des weiteren Speichers durch den Sprachspeicher, wie oben beschrieben, durchgeführt. Als Ergebnis wird die Sprachnachricht immer in der Sprachbox des ersten Telekommunikationsendgerätes in der Umleitungskette, das das Leistungsmerkmal "eigene Sprachbox" gesetzt hat, abgespeichert.

Nachfolgend werden Kurzbeispiele für das erfindungsgemäße Verfahren mit Bezug auf die beigefügte Figur dargestellt:

### 1. Rufumleitung ohne gesetztes Leistungsmerkmal "eigene Sprachbox"

Es geht ein externer Anruf bei dem Mitarbeiter A2 ein. Der Mitarbeiter A2 hat eine Rufumleitung zu der Sekretärin B1 eingerichtet. Die Sekretärin B1 hat wiederum eine Rufumleitung zu der ihr zugeordneten Sprachbox in dem Sprachspeicher S eingerichtet. Somit wird der Anruf auf die Sprachbox der Sekretärin B1 umgeleitet.

Eine derartige Rufumleitung ist insofern ungünstig, als der externe Teilnehmer eigentlich den Mitarbeiter A2 und nicht die Sekretärin B1 sprechen wollte. Somit wäre es besser gewesen, wenn der Mitarbeiter A2 das Leistungsmerkmal "eigene Sprachbox" gesetzt hätte, um die eingegangene Sprachnachricht auf seiner eigenen Sprachbox abzuspeichern.

### 2. Rufumleitung von Teilnehmer mit gesetztem Leistungsmerkmal "eigene Sprachbox" zu Teilnehmer ohne gesetztes Leistungsmerkmal

Es geht ein externer Anruf bei dem Mitarbeiter A1 ein. A1 hat eine Rufumleitung zu der Sekretärin B1 eingerichtet. Gleichzeitig hat der Mitarbeiter A1 das Leistungsmerkmal "eigene Sprachbox" gesetzt. Deshalb wird die Rufnummer des Mitarbeiters A1 in dem weiteren Speicher bei Durchlaufen der Rufumleitungskette abgespeichert. Der Ruf wird demzufolge mit der eingegangenen Sprachnachricht durch Adressieren der Sprachbox mittels der gespeicherten Rufnummer auf der Sprachbox des Mitarbeiters A1 abgespeichert. Da der Mitarbeiter A1 derjenige Teilnehmer ist, mit dem der Teilnehmer, dessen externer Anruf bei dem Mitarbeiter A1 eingeht, verbunden werden wollte, findet das Ablegen der durch den externen Anruf eingehenden Sprachnachricht auf der richtigen Sprachbox, nämlich derjenigen des Mitarbeiters A1, statt.

### 3. Rufumleitung zwischen Teilnehmern mit gesetztem Leistungsmerkmal "eigene Sprachbox"

Es geht ein externer Anruf bei dem Mitarbeiter A1 ein. Der Mitarbeiter A1 hat eine Rufumleitung zu einem Mitarbeiter C1 eingerichtet. Beide Mitarbeiter A1 und C1 haben das Leistungsmerkmal "eigene Sprachbox" gesetzt. Da jedoch beim Durchlaufen der Rufumleitungskette zuerst die Rufnummer des Mitarbeiters A1 in dem weiteren Speicher abgespeichert wird, wird die Rufnummer des Mitarbeiters C1 nicht mehr in dem weiteren Speicher gespeichert, trotzdem der Mitarbeiter C1 das Leistungsmerkmal gesetzt hat. Somit wird die mit dem externen Anruf eingehende Sprachnachricht auf der Sprachbox des Mitarbeiters A1 abgespeichert, welcher der gewünschte Teilnehmer für den externen Anrufer ist.

### 4. Rufweiterleitung von Teilnehmer ohne gesetztes Leistungsmerkmal zu Teilnehmer mit gesetztem Leistungsmerkmal

Es geht ein externer Anruf bei der Sekretärin B1 ein. Die Sekretärin B1 nimmt den Ruf entgegen und legt auf Wunsch des externen Teilnehmers den Anruf auf den Mitarbeiter C1 um. Der Mitarbeiter C1 hat jedoch das Leistungsmerkmal "eigene Sprachbox" gesetzt, wodurch der eingehende Anruf mit der ihm zugeordneten Sprachnachricht auf der Sprachbox des Mitarbeiters C1 abgespeichert wird. Da C1 derjenige Teilnehmer war, den der externe Anrufer zu sprechen wünschte, findet eine Speicherung der Sprachnachricht auf der richtigen Sprachbox statt.

### 5. Rufumleitung von einem Teilnehmer mit gesetztem Leistungsmerkmal zu einem Teilnehmer ohne gesetztem Leistungsmerkmal und zu einem weiteren Teilnehmer mit gesetztem Leistungsmerkmal

Es geht ein externer Anruf bei dem Mitarbeiter A1 ein. Der Mitarbeiter A1 hat eine Rufumleitung zu der Sekretärin B1 eingerichtet. Die Sekretärin B1 hat wiederum eine Rufumleitung zu dem Mitarbeiter C1 eingerichtet. C1 hat ebenso wie A1 das Leistungsmerkmal "eigene Sprachbox" eingerichtet. Jedoch wird die Rufnummer des Mitarbeiters C1 beim Durchlaufen der Rufumleitungskette nicht mehr in dem weiteren Speicher abgelegt, da in diesem bereits die Rufnummer des Mitarbeiters A1 abgespeichert ist. Somit wird die eingehende Sprachnachricht auf der Sprachbox des Mitarbeiters A1 abgespeichert, der als gewünschter Gesprächspartner vom externen Teilnehmer angerufen wurde.

### Bezugszeichenliste

- 1: Nebenstellenanlage
- 2: amtsseitiger Eingang zur Nebenstellenanlage
- A1, C1: Telekommunikationsendgerät mit gesetztem Leistungsmerkmal "eigene Sprachbox"
- A2, B1: Telekommunikationsendgerät
- S: Sprachspeicher
- SB_{A1}, SB_{A2}, SB_{B1}, SB_{C1}: Sprachbox

## Patentansprüche

1. Verfahren zum Umleiten eines eingehenden Rufs (A1, A2, B1, C1) von Telekommunikationsendgerät (A1, A2, B1, C1) zu Telekommunikationsendgerät (A1, A2, B1, C1) innerhalb einer aus mindestens zwei Geräten bestehenden Reihe von Telekommunikationsendgeräten, wobei den Geräten (A1, A2, B1, C1) jeweils ein Sprachspeicherbereich (SB_{A1}, SB_{A2}, SB_{B1}, SB_{C1}) zum Speichern einer mit dem Ruf eingehenden Sprachnachricht zugeordnet ist,
**dadurch gekennzeichnet, daß**
die mit dem Ruf eingehende Sprachnachricht in den Sprachspeicherbereich (SB_{A1}, SB_{A2}, SB_{B1}, SB_{C1}) eines der Geräte (A1, A2, B1, C1), von dem aus zu einem anderem Gerät umgeleitet wird, durch Setzen eines Leistungsmerkmals gespeichert wird.

2. Telekommunikationsendgerät nach Anspruch 1,
**dadurch gekennzeichnet, daß**
die Sprachspeicherbereiche (SB_{A1}, SB_{A2}, SB_{B1}, SB_{C1}) der Telekommunikationsendgeräte in einem für alle Geräte (A1, A2, B1, C1) gemeinsamen, zentral in einem Kommunikationsnetz angeordneten Sprachspeicher (S) vorgesehen sind.

3. Verfahren nach einem der vorangegangenen Ansprüche,
**dadurch gekennzeichnet, daß**
ein Rufnummernspeicher durch ein Telekommunikationsendgerät (A1, A2, B1, C1), an dem das Leistungsmerkmal nicht gesetzt wurde, initialisiert wird.

4. Verfahren nach einem der vorangegangenen Ansprüche, insbesondere nach Anspruch 3,
**dadurch gekennzeichnet, daß**
in dem initialisierten Rufnummernspeicher die Rufnummer des Telekommunikationsendgerätes (A1, A2, B1, C1), an dem das Leistungsmerkmal gesetzt wurde, für jeden umgeleiteten Ruf gespeichert wird.

5. Verfahren nach einem der vorangegangenen Ansprüche, insbesondere nach Anspruch 4,
**dadurch gekennzeichnet, daß**
der Sprachspeicherbereich (SB_{A1}, SB_{C1}) des Telekommunikationsendgerätes (A1, C1), an dem das Leistungsmerkmal gesetzt wurde, mit der in dem Rufnummernspeicher gespeicherten Rufnummer adressiert wird, um die Sprachnachricht in dem Sprachspeicherbereich (SB_{A1}, SB_{C1}) zu speichern.
